# FASCICULE DE BREVET EUROPEEN

(11) **EP 4 182 554 B1**
(45) Date de publication et mention de la délivrance du brevet: **09.04.2025**
(21) Numéro de dépôt: 21734422.5
(22) Date de dépôt: 01.06.2021
(51) Int. Cl.: F02P 5/04, F02P 5/15, F02D 41/02, F02D 41/06, F02D 41/40

(54) **PROCEDE DE DETERMINATION DE L'AVANCE A L'ALLUMAGE D'UN MOTEUR A COMBUSTION INTERNE A ALLUMAGE COMMANDE**
VERFAHREN ZUR BESTIMMUNG DES ZÜNDZEITPUNKTS EINER FREMDGEZÜNDETEN BRENNKRAFTMASCHINE
METHOD FOR DETERMINING THE IGNITION TIMING OF A SPARK IGNITION INTERNAL COMBUSTION ENGINE

(30) Priorité: 15.07.2020 FR 2007431
(43) Date de publication de la demande: 24.05.2023
(73) Titulaire: Stellantis Auto SAS, 78300 Poissy (FR)
(72) Inventeur: GALLIENNE, Felix, 92250 LA GARENNE COLOMBES (FR); CONVERT, Benjamin, 92400 COURBEVOIE (FR); DAMBRICOURT, Frédéric, 78600 MAISONS LAFFITTE (FR)
(74) Mandataire: PSIP
(86) Numéro de dépôt international: PCT/FR2021/050985
(87) Numéro de publication internationale: WO 2022/013487

(56) Documents cités:
- FR-A1- 3 064 685
- GB-A- 2 584 427
- US-A1- 2009 017 987

## Description

La présente invention revendique la priorité de la demande française N°2007431 déposée le 15.07.20 .

La présente invention concerne le domaine des moteurs à combustion interne. Plus particulièrement, l'invention a pour objet un procédé de détermination de l'avance à l'allumage d'un moteur à combustion interne à allumage commandé

Les normes environnementales imposent des limitations drastiques sur l'émission des polluants des véhicules. Afin de maitriser ces émissions, le moteur à combustion interne du véhicule est relié à une ligne d'échappement équipée d'organes de dépollution des gaz d'échappement tels que par exemple un catalyseur. Ce catalyseur ne devient véritablement efficace qu'à partir d'une certaine température de fonctionnement, classiquement appelée température d'amorçage. Au-delà de cette température le catalyseur est dit amorcé et traite très efficacement les polluants, par contre en deçà de cette température le catalyseur n'est pas amorcé et ne traite pas ou peu les polluants.

Pour amorcer le catalyseur, il faut donc apporter des calories dans la ligne d'échappement du moteur à combustion interne. Pour cela une solution est de dégrader la combustion, c'est-à-dire de décaler l'avance à l'allumage de sorte à retarder l'allumage par rapport à son réglage optimal. Cependant cela a pour conséquence de diminuer la stabilité de la combustion et d'avoir un impact sur l'agrément moteur et le ressenti par le conducteur.

Afin d'améliorer cette stabilité de combustion, il est connu du document FR3064685A1 de distribuer la quantité de carburant à injecter entre une quantité principale de carburant et une quantité auxiliaire, cette quantité auxiliaire étant injectée autour du Point mort Haut combustion et après l'allumage du mélange air/ quantité principale de carburant. Cependant, l'application d'une telle stratégie entraîne une modification du rendement global du moteur et du couple moteur.

L'invention a pour objectif de pallier au moins un des inconvénients de l'état de l'art susmentionné.

Pour atteindre cet objectif, il est prévu selon l'invention un procédé de détermination d'une consigne d'avance à l'allumage d'un moteur à combustion interne à allumage commandé comprenant les étapes de :
- détermination d'une consigne de couple,
- détermination d'un couple effectif,
- détermination d'un premier rendement d'avance à l'allumage en fonction du couple de consigne et du couple effectif, dans le cas d'un mode d'injection du carburant sans micro-injection,
- détermination d'un état d'activation ou non d'un mode d'injection du carburant pour lequel une partie de ce carburant est prévue pour être injectée par micro-injection,
caractérisé en ce qu'il comprend en outre les étapes de :
- détermination d'un rendement de micro injection,
- détermination du rendement d'avance à l'allumage avec micro-injection, à partir du rendement de micro injection et du premier rendement d'avance à l'allumage,
- détermination et application de la consigne d'avance à l'allumage en fonction du rendement d'avance à l'allumage avec micro-injection déterminé précédemment.

L'effet technique est de permettre grâce au facteur correctif que constitue le rendement de micro-injection un ajustement du rendement global du moteur et du couple moteur.

Diverses caractéristiques supplémentaires peuvent être prévues, seules ou en combinaisons :
Selon une réalisation, le premier rendement d'avance à l'allumage est comparé à un seuil d'activation du mode d'injection avec micro-injection, le mode d'injection avec micro-injection étant autorisé lorsque le premier rendement d'avance à l'allumage est inférieur au seuil d'activation.

Selon une réalisation, le seuil d'activation est compris entre 0,6 et 0,8.

Selon une réalisation, la consigne d'avance à l'allumage est déterminée à partir d'une courbe monotone bijective qui relie le rendement d'avance à l'allumage à l'avance à l'allumage.

Selon une réalisation, la détermination de l'état d'activation ou non de la micro-injection est conditionnée par une autorisation supplémentaire issue du système de contrôle d'injection.

Selon une réalisation, le procédé comprend, suite à la détermination de l'état d'activation ou non de la micro-injection, une étape de réalisation des consignes d'injection.

D'autres particularités et avantages apparaîtront à la lecture de la description ci-après d'un mode particulier de réalisation, non limitatif de l'invention, faite en référence aux figures dans lesquelles :
[Fig 1] : La figure 1 représente schématiquement les étapes d'un mode de réalisation du procédé de l'invention.
[Fig 2] : La figure 2 illustre la relation entre rendement d'avance à l'allumage et avance à l'allumage.

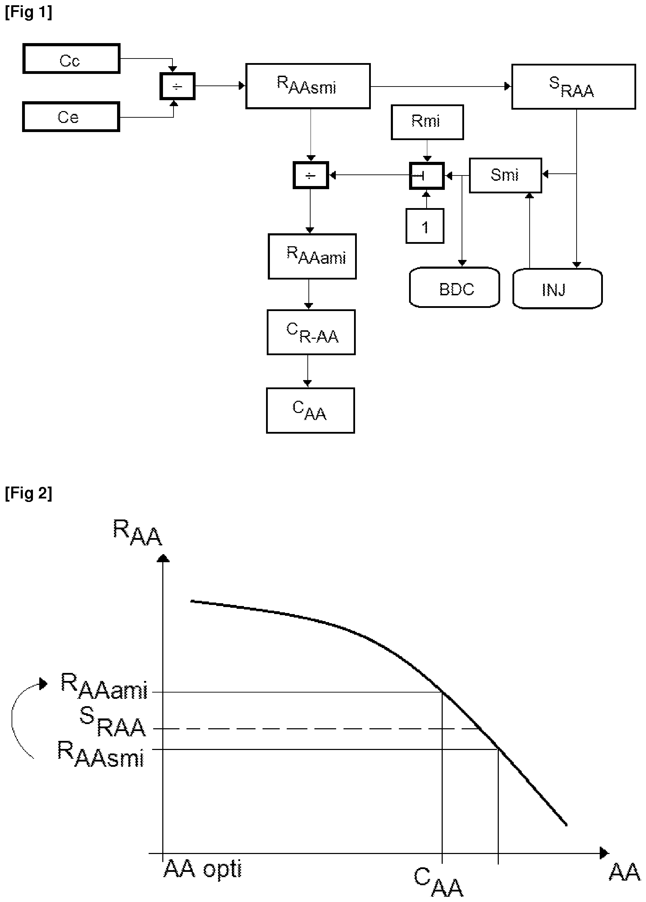

La figure 1 représente schématiquement les étapes d'un mode de réalisation du procédé de l'invention.

L'invention s'applique à un moteur à combustion interne à allumage commandé, par exemple un moteur fonctionnant à l'essence. Un tel moteur peut équiper un véhicule automobile, pour sa propulsion. La mise en œuvre de ce procédé, est réalisé par un calculateur électronique, par exemple le calculateur moteur ou un calculateur dédié. A cet effet, le calculateur comprend les moyens d'acquisition, de traitement par instructions logicielles stockées dans une mémoire ainsi que les moyens de commande requis à mise en œuvre du procédé de l'invention.

L'avance à l'allumage se définit comme la différence entre le moment où l'étincelle est déclenchée et celui où le piston atteint son Point Mort Haut. Cette avance peut être quantifiée comme l'angle que forme la bielle par rapport à l'axe du piston, en degré. Il existe une avance à l'allumage dite optimale pour laquelle le rendement est maximal et le moteur fournit, pour une consommation donnée, le couple optimal. Il y a dégradation de l'avance à l'allumage lorsque le contrôle moteur est amené à demander une avance à l'allumage retardée par rapport à l'avance à l'allumage optimale. Le rendement d'avance à l'allumage est le ratio entre le rendement du moteur à l'avance à l'allumage optimum et celui à une autre avance à l'allumage.

En référence à cette figure 1, La consigne d'avance à l'allumage, C_{AA}, est déterminée à partir de la demande de couple du conducteur encore désignée consigne de couple moteur, Cc, et de l'estimation du couple moteur effectif, Ce. La demande de couple du conducteur, Cc, est classiquement l'image de l'appui sur la pédale d'accélérateur. L'estimation du couple moteur, Ce, est obtenue à partir de la quantité d'air contenu dans le cylindre et des rendements de cycle et de richesse.

Dans le mode d'injection avec micro-injection, une partie du carburant est prévue pour être injectée par micro-injection. L'application de la micro injection entraîne une modification du rendement global du moteur. En cas d'activation de la micro injection, le couple moteur va donc évoluer si aucune autre action supplémentaire n'est réalisée. C'est pourquoi, il est nécessaire de prendre en compte cette évolution du rendement moteur dans l'élaboration de la consigne d'avance à l'allumage, C_{AA}. Cette prise en compte permettra d'améliorer l'agrément moteur par un meilleur suivi de couple et d'optimiser les émissions polluantes.

A cet effet, l'invention consiste à calculer un rendement spécifique de micro-injection qui est ensuite utilisé pour déterminer la consigne d'avance à l'allumage. Le rendement de micro injection dépend physiquement du régime, de la charge moteur, de la dégradation d'avance et de la richesse de l'injection principale.

Dans ce mode réalisation, un premier rendement d'avance à l'allumage, R_{AAsmi}, est donc déterminé à partir du ratio entre la consigne de couple, Cc, et le couple moteur effectif, Ce. Ce premier rendement d'avance à l'allumage, R_{AAsmi}, correspond alors au rendement d'avance à l'allumage, dans le cas d'un mode d'injection du carburant dans le moteur sans micro-injection.

Afin de ne pas permettre l'activation de la micro injection dans des conditions de fonctionnement du moteur qui seraient pénalisantes pour le moteur, par exemple une injection trop tardive, à un moment où le piston du moteur serait trop haut, avec un risque d'impact du jet de carburant sur le piston, ce premier rendement d'avance à l'allumage, R_{AAsmi}, est comparé à un seuil d'activation, S_{RAA}.

Ainsi, si le premier rendement d'avance à l'allumage, R_{AAsmi}, est inférieur à ce seuil d'activation, S_{RAA}, l'activation de la micro injection est autorisée. L'ordre de grandeur du seuil d'activation, S_{RAA}, est de 60 à 80% de rendement d'avance à l'allumage, autrement dit compris entre 0,6 et 0,8. Ce seuil d'activation, S_{RAA}, peut être dépendant du régime et de la charge du moteur. Ce seuil d'activation, S_{RAA}, peut être mémorisé dans une cartographie contenue dans une mémoire.

En fonction du résultat de la comparaison, le procédé détermine un état de micro-injection, Smi, actif ou non actif.

Si l'état de micro injection, Smi, est actif, alors la valeur un rendement de micro-injection, Rmi, est pris en compte pour corriger le premier rendement d'avance à l'allumage, R_{AAsmi},

Si l'état de micro injection, Smi, est non actif, alors la valeur 1 est utilisée de sorte à garder la valeur du premier rendement d'avance à l'allumage, R_{AAsmi}.

La détermination de l'état actif ou non de la micro-injection, SMI, peut également prévoir d'être conditionnée à une autorisation supplémentaire issue d'une fonction de gestion d'injection d'un système d'injection, INJ, qui vérifie que les conditions sont acceptables pour faire de la micro injection du point de vue du système d'injection seulement. Par exemple il y a une vérification sur la masse de carburant à totale à injecter. Elle doit supérieure à un seuil mini pour pouvoir être coupée en deux, avec une injection principale et une micro-injection.

On peut encore prévoir d'envoyer l'état de la micro-injection, Smi, vers une fonction, BDC, qui traduit la décision de faire ou pas la micro injection en d'injection.

Le rendement de micro-injection, Rmi, peut être préalablement déterminé pour chaque point de fonctionnement du moteur et mémorisé dans une cartographie qui établit ce rendement en fonction des paramètres de fonctionnement du moteur. Ce rendement de micro injection traduit la dégradation de couple moteur due à la partie du carburant utilisée pour les micro-injection et ne participant pas à la production de couple moteur. L'ordre de grandeur du rendement de micro injection, Rmi, est de 85 à 90% environ.

Ainsi le premier rendement d'avance à l'allumage, R_{AAsmi}, est corrigé en le divisant par le rendement de micro injection, Rmi, pour définir la consigne de rendement d'avance avec micro-injection, R_{AAami}, qui est ensuite utilisée pour calculer la consigne d'avance à l'allumage, C_{AA}.

La consigne d'avance à l'allumage, C_{AA}, est déterminé à partir du rendement d'avance avec micro-injection, R_{AAami}, via une courbe monotone, C_{R-AA}, comme également illustré en figure 2, qui établit une relation bijective entre le rendement d'avance à l'allumage, R_{AA}, et l'avance à l'allumage, AA, appliquée.

Grâce à cette correction, l'avance à l'allumage appliquée est plus proche de l'avance à l'allumage optimum que l'avance à l'allumage si le carburant était injecté dans les mode d'injection sans micro-injection.

Grâce à cette stratégie, l'activation de la micro injection est transparente vis-à-vis du couple produit par le moteur. L'activation de la micro injection est compensée par une dégradation d'avance à l'allumage moins importante pour rester à iso-couple. Ainsi il n'y aura pas d'impact sur le ressenti dans le véhicule par le client.

La stratégie proposée permet une gestion précise du couple moteur lorsque la micro injection est utilisée. Cette gestion précise permet notamment d'assurer une performance optimale de l'agrément de conduite mais aussi des émissions de polluants.

## Revendications

1. Procédé de détermination d'une consigne d'avance à l'allumage (C_{AA}) d'un moteur à combustion interne à allumage commandé comprenant les étapes de :
- détermination d'une consigne de couple (Cc),
- détermination d'un couple effectif (Ce),
- détermination d'un premier rendement d'avance à l'allumage (R_{AAsmi}) en fonction du couple de consigne (Cc) et du couple effectif (Ce), dans le cas d'un mode d'injection du carburant sans micro-injection,
- détermination d'un état d'activation ou non d'un mode d'injection du carburant pour lequel une partie de ce carburant est prévue pour être injectée par micro-injection (Smi),
**caractérisé en ce qu'**il comprend en outre les étapes de :
- détermination d'un rendement de micro injection (Rmi),
- détermination du rendement d'avance à l'allumage avec micro-injection (R_{AAami}), à partir du rendement de micro injection (Rmi) et du premier rendement d'avance à l'allumage (R_{AAsmi}),
- détermination et application de la consigne d'avance à l'allumage (C_{AA}) en fonction du rendement d'avance à l'allumage avec micro-injection (R_{AAami}) déterminé précédemment.

2. Procédé selon la revendication 1, **caractérisé en ce que** le premier rendement d'avance à l'allumage (R_{AAsmi}) est comparé à un seuil d'activation (S_{RAA}) du mode d'injection avec micro-injection, le mode d'injection avec micro-injection étant autorisé lorsque le premier rendement d'avance à l'allumage (R_{AAsmi}) est inférieur au seuil d'activation (S_{RAA}).

3. Procédé selon la revendication précédente, **caractérisé en ce que** le seuil d'activation est compris entre 0,6 et 0,8.

4. Procédé selon l'une des revendications précédentes, **caractérisé en ce que** la consigne d'avance à l'allumage (C_{AA}) est déterminée à partir d'une courbe monotone bijective qui relie le rendement d'avance à l'allumage (R_{AA}) à l'avance à l'allumage (AA).

5. Procédé selon l'une des revendications précédentes, **caractérisé en ce que** la détermination de l'état d'activation ou non de la micro-injection (Smi) est conditionnée par une autorisation supplémentaire issue du système de contrôle d'injection (INJ).

6. Procédé selon l'une des revendications précédentes, **caractérisé en ce qu'**il comprend suite à la détermination de l'état d'activation ou non de la micro-injection (Smi), une étape de réalisation des consignes d'injection (BDC).

## Patentansprüche

1. Verfahren zur Bestimmung eines Zündverstellungssollwerts (C _{AA} ) eines fremdgezündeten Verbrennungsmotors, umfassend die Schritte:
- Bestimmung einer Drehmomentreferenz (Cc),
- Bestimmung eines effektiven Drehmoments (Ce),
- Bestimmung einer ersten Zündvorverstellungseffizienz ( R _{AAsmi} ) als Funktion des Zieldrehmoments (Cc) und des effektiven Drehmoments (Ce) im Fall eines Kraftstoffeinspritzmodus ohne Mikroeinspritzung,
- Bestimmung des Aktivierungszustands oder Nichtaktivierungszustands eines Kraftstoffeinspritzmodus, für den ein Teil dieses Kraftstoffs durch Mikroeinspritzung ( Smi ) eingespritzt werden soll,
gekennzeichnet , dass es weiterhin die folgenden Schritte umfasst:
- Bestimmung einer Mikroinjektionsausbeute ( Rmi ),
- Bestimmung des Zündvorverstellungswirkungsgrades mit Mikroeinspritzung ( R _{AAami}), aus dem Mikroeinspritzwirkungsgrad ( Rmi ) und dem ersten Zündvorverstellungswirkungsgrad ( R _{AAsmi} ),
- Bestimmung und Anwendung des Zündverstellungssollwerts (C _{AA}) in Abhängigkeit von der zuvor ermittelten Zündverstellungseffizienz mit Mikroeinspritzung ( R _{AAami} ).

2. Verfahren nach Anspruch 1, **dadurch gekennzeichnet, dass** der erste Zündvorverstellungswirkungsgrad ( R _{AAsmi} ) mit einem Aktivierungsschwellenwert (S _{RAA}) des Einspritzmodus mit Mikroeinspritzung verglichen wird, wobei der Einspritzmodus mit Mikroeinspritzung bei der ersten zugelassen wird Der Zündverstellungswirkungsgrad ( R _{AAsmi} ) ist niedriger als der Aktivierungsschwellenwert (S _{RAA}).

3. Verfahren nach dem vorhergehenden Anspruch, **dadurch gekennzeichnet, dass** die Aktivierungsschwelle zwischen 0,6 und 0,8 liegt.

4. Verfahren nach einem der vorhergehenden Ansprüche, **dadurch gekennzeichnet, dass** der Zündverstellungssollwert (C _{AA}) aus einer bijektiven monotonen Kurve ermittelt wird, die den Zündverstellungswirkungsgrad (R _{AA}) im Voraus bei der Zündung (AA) in Beziehung setzt.

5. Verfahren nach einem der vorhergehenden Ansprüche, **dadurch gekennzeichnet, dass** die Bestimmung des Aktivierungszustands oder Nichtaktivierungszustands der Mikroeinspritzung ( Smi ) von einer zusätzlichen Autorisierung durch das Einspritzsteuersystem (INJ) abhängig ist.

6. Verfahren nach einem der vorhergehenden Ansprüche, **dadurch gekennzeichnet, dass** es nach der Bestimmung des Aktivierungszustands oder Nichtaktivierungszustands der Mikroinjektion ( Smi ) einen Schritt zur Erstellung der Injektionsanweisungen (BDC) umfasst.

## Claims

1. Method for determining an ignition advance setpoint (CAA ₎ of a spark-ignition internal combustion engine comprising the steps of:
- determination of a torque setpoint (Cc),
- determination of an effective torque (Ce),
- determination of a first ignition advance efficiency ( R _{AAsmi} ) as a function of the set torque (Cc) and the effective torque (Ce), in the case of a fuel injection mode without micro-injection,
- determination of an activation state or not of a fuel injection mode for which part of this fuel is intended to be injected by micro-injection ( Smi ),
**characterized in that** it further comprises the steps of:
- determination of a micro injection yield ( Rmi ),
- determination of the ignition advance efficiency with micro-injection ( R _{AAami} ), from the micro-injection efficiency ( Rmi ) and the first ignition advance efficiency ( R _{AAsmi} ),
- determination and application of the ignition advance instruction (C _{AA}) as a function of the ignition advance efficiency with micro-injection ( R _{AAami}) determined previously.

2. Method according to claim 1, **characterized in that** the first ignition advance efficiency ( R _{AAsmi} ) is compared with an activation threshold (S _{RAA}) of the injection mode with micro-injection, the injection mode with micro-injection being authorized when the first ignition advance efficiency ( R _{AAsmi}) is lower than the activation threshold (S _{RAA}).

3. Method according to the preceding claim, **characterized in that** the activation threshold is between 0.6 and 0.8.

4. Method according to one of the preceding claims, **characterized in that** the ignition advance setpoint (C _{AA}) is determined from a bijective monotonic curve which links the ignition advance efficiency (R _{AA}) to the ignition advance (AA).

5. Method according to one of the preceding claims, **characterized in that** the determination of the activation status or not of the micro-injection ( Smi ) is conditioned by an additional authorization from the injection control system (INJ).

6. Method according to one of the preceding claims, **characterized in that** it comprises, following the determination of the activation state or not of the micro-injection ( Smi ), a step of carrying out the injection instructions (BDC).
